# FASCICULE DE BREVET EUROPEEN

(11) **EP 3 812 219 B1**
(45) Date de publication et mention de la délivrance du brevet: **27.07.2022**
(21) Numéro de dépôt: 20196588.6
(22) Date de dépôt: 17.09.2020
(51) Int. Cl.: B60R 16/04, B60R 13/08

(54) **ENSEMBLE DE BATTERIE COMPORTANT UN PANNEAU D ABSORPTION ACOUSTIQUE ET PROCÉDÉ D'ÉQUIPEMENT D'UN ENSEMBLE BATTERIE AVEC UN TEL PANNEAU**
BATTERIEANORDNUNG MIT EINER SCHALLABSORBIERENDEN PLATTE, UND VERFAHREN ZUM AUSRÜSTEN EINER BATTERIEANORDNUNG MIT EINER SOLCHEN PLATTE
BATTERY ASSEMBLY COMPRISING AN ACOUSTIC ABSORPTION PANEL AND METHOD FOR EQUIPPING A BATTERY ASSEMBLY WITH SUCH A PANEL

(30) Priorité: 24.10.2019 FR 1911913
(43) Date de publication de la demande: 28.04.2021
(73) Titulaire: Renault s.a.s, 92100 Boulogne Billancourt (FR)
(72) Inventeur: GHIRARDINI, Armand, 78430 Louveciennes (FR); PAROLINI, Pascal, 95720 Le Mesnil Aubry (FR)
(74) Mandataire: Renault Group

(56) Documents cités:
- EP-A1- 2 990 271
- US-A1- 2018 015 893
- US-B1- 6 593 027

## Description

### Domaine technique de l'invention

La présente invention concerne le domaine de l'agencement des véhicules automobiles.

L'invention concerne plus particulièrement un ensemble de batterie comportant un panneau d'absorption acoustique ainsi qu'un procédé d'équipement d'un ensemble de batterie de l'art antérieur avec un tel panneau d'absorption acoustique.

### Arrière-plan technique

La réglementation est de plus en plus exigeante en termes de limitation des émissions de bruit et elle imposera aux véhicules automobiles un niveau maximal de bruit de 68dB en 2024.

US 2018/015893 divulgue un ensemble comportant : un bac support d'au moins une batterie de véhicule automobile comportant un fond horizontal; une batterie logée dans le bac support dans lequel elle repose verticalement selon une direction verticale en appui sur le fond, au moins une patte de retenue de la batterie dans le bac support, un panneau qui s'étend au moins en regard d'une face latérale verticale, dite équipée, de la batterie; un dispositif de fixation du panneau sur le bac support, la patte de retenue de la batterie dans le bac support étant intégrée au panneau. Dans un véhicule à moteur thermique, la majorité des émissions acoustiques provient du moteur.

Une première solution pour réduire les émissions acoustiques consiste à modifier le moteur pour le rendre plus silencieux en optimisant son fonctionnement et sa conception. Une deuxième solution, pouvant être combinée à la première, consiste à faire écran à la propagation des ondes sonores provenant du moteur.

On connait différents dispositifs faisant écran à la propagation des ondes sonores provenant du moteur.

Il existe par exemple des coffrages d'absorption et/ou d'isolation acoustique agencés autour du moteur. Cependant, ces coffrages présentent l'inconvénient de réduire l'accessibilité aux composants du compartiment moteur. Ces coffrages présentent également le désavantage de limiter la ventilation du moteur. En particulier, de tels coffrages encombrent le compartiment moteur.

On connait aussi des revêtements collés sur des composants du compartiment moteur permettant de le « calfeutrer » acoustiquement. Ces revêtements présentent l'inconvénient de ne pas être pérennes dans la mesure où ils sont régulièrement détériorés, décollés ou perdus, notamment lors des opérations de maintenance du véhicule.

L'invention a notamment pour objectif de pallier tout ou partie des inconvénients de l'art antérieur. Un objectif de l'invention est de proposer un dispositif d'absorption d'une partie des ondes sonores provenant du moteur qui soit pérenne, qui présente un faible encombrement, et qui puisse être installés sans modifier l'agencement du compartiment moteur ni modifier d'autres équipements adjacents au moteur.

### Résumé de l'invention

L'invention propose un ensemble comportant :
- un bac support d'au moins une batterie de véhicule automobile comportant un fond horizontal ;
- une batterie logée dans le bac support dans lequel elle repose verticalement en appui sur le fond ;
- au moins une patte de retenue de la batterie dans le bac support ; l'ensemble comportant :
- un panneau d'absorption acoustique qui s'étend au moins en regard d'une face latérale verticale, dite équipée, de la batterie ;
- un dispositif de fixation du panneau d'absorption acoustique sur le bac support,
la au moins une patte de retenue de la batterie dans le bac support étant intégrée au panneau d'absorption acoustique.

Selon d'autres caractéristiques de l'invention :
- la patte de retenue s'étend horizontalement et est reçue en vis-à-vis d'une portion de la batterie pour retenir la batterie dans le bac support selon la direction verticale ;
- le dispositif de fixation du panneau d'absorption acoustique comporte au moins une tige filetée de fixation selon la direction verticale ;
- le dispositif de fixation comporte une patte de fixation s'étendant horizontalement en vis-à-vis du fond du bac support, et la patte de fixation est fixée au fond du bac support au moyen de ladite tige filetée ;
- le panneau d'absorption acoustique comporte une plaque en acier et une mousse expansée en polyuréthane collée sur la plaque en acier ;
- la patte de retenue est réalisée en une seule pièce avec la plaque en acier du panneau d'absorption acoustique ;
- la patte de fixation est réalisée en une seule pièce avec la plaque en acier du panneau d'absorption acoustique ;
- le panneau d'absorption acoustique s'étend en regard d'au moins 75% de l'aire de ladite face équipée de la batterie ;
- le panneau d'absorption acoustique comporte un premier bord latéral recouvrant au moins partiellement une première autre face verticale de la batterie adjacente à la face latérale équipée, et un deuxième bord latéral recouvrant au moins partiellement une deuxième autre face verticale de la batterie qui est adjacente à la face latérale équipée et qui est opposée à ladite première autre face verticale.

L'invention propose également un procédé d'équipement d'un ensemble avec un panneau d'absorption acoustique, l'ensemble comportant :
- un bac support de batterie de véhicule automobile comportant un fond horizontal ;
- une batterie logée dans le bac support dans lequel elle repose verticalement en appui sur le fond ;
- au moins une première patte de retenue de la batterie dans le bac support ; le panneau d'absorption acoustique comportant :
- un dispositif de fixation ; et
- une patte de retenue intégrée au panneau ;
le procédé comportant les étapes suivantes :
- retrait de la première patte de retenue ;
- mise en place du panneau d'absorption acoustique en regard d'une face latérale verticale de la batterie en mettant la patte de retenue intégrée au panneau d'absorption acoustique en lieu et place de la première patte de retenue ;
- fixation du dispositif de fixation du panneau d'absorption acoustique sur le bac support.

### Brève description des figures

D'autres caractéristiques et avantages de l'invention apparaitront au cours de la lecture de la description détaillée qui va suivre pour la compréhension de laquelle on se reportera aux dessins annexés dans lesquels :
La figure 1 est une vue de dessus d'un compartiment moteur d'un véhicule comportant un ensemble selon un mode de réalisation l'invention ;
La figure 2 est une vue en perspective d'un ensemble selon un mode de réalisation de l'invention ;
La figure 3 est une coupe transversale d'un ensemble selon un mode de réalisation de l'invention ;
La figure 4 est une vue en perspective de l'avant d'un panneau d'absorption acoustique selon un mode de réalisation de l'invention ;
La figure 5 est une vue en perspective de l'arrière du panneau d'absorption acoustique de la figure 4 ;
La figure 6 est une vue en perspective du dessus du panneau d'absorption acoustique de la figure 4 ;
La figure 7 est une vue en perspective du dessous du panneau d'absorption acoustique de la figure 4 ;
La figure 8 est une vue en perspective d'un ensemble à équiper selon le procédé de l'invention.

### Description détaillée de l'invention

Pour la description de l'invention et la compréhension des revendications, on adoptera à titre non limitatif et sans référence limitative à la gravité terrestre les orientations longitudinale, transversale et verticale selon le repère orthogonal direct X, Y, Z indiqué aux figures dont les axes longitudinal X et transversal Y s'étendent dans un plan horizontal.

Par convention, l'axe longitudinal X est orienté de l'arrière vers l'avant et selon le sens de la marche avant du véhicule ; l'axe transversal Y est orienté de la droite vers la gauche du véhicule et l'axe vertical Z est orienté du bas vers le haut du véhicule.

Dans la description qui va suivre, des éléments identiques, similaires ou analogues seront désignés par les mêmes chiffres de référence.

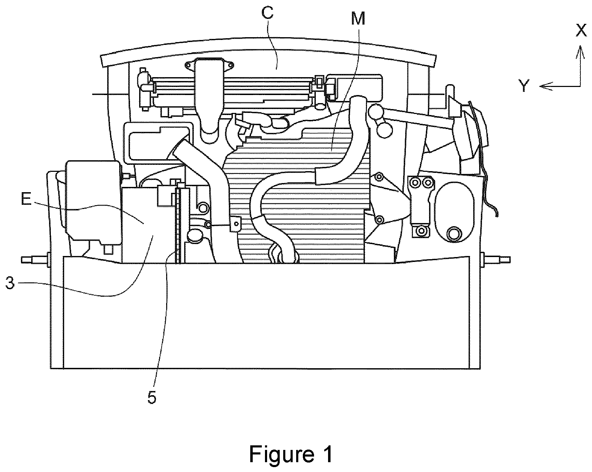

Le compartiment moteur C représenté à la figure 1 comporte notamment un moteur thermique M et un ensemble E selon l'invention.

En référence aux figures 1 à 3, l'ensemble E comporte un bac support 1 de batterie, une batterie 3 et un panneau d'absorption acoustique 5.

L'ensemble E s'étend en longueur selon la direction X. L'ensemble E comporte une face latérale de droite agencée à proximité du moteur. La face latérale de droite comprend le panneau d'absorption acoustique 5.

Le panneau d'absorption acoustique 5 intercepte et absorbe une quantité importante des ondes acoustiques provenant du moteur M et se propageant latéralement vers la gauche.

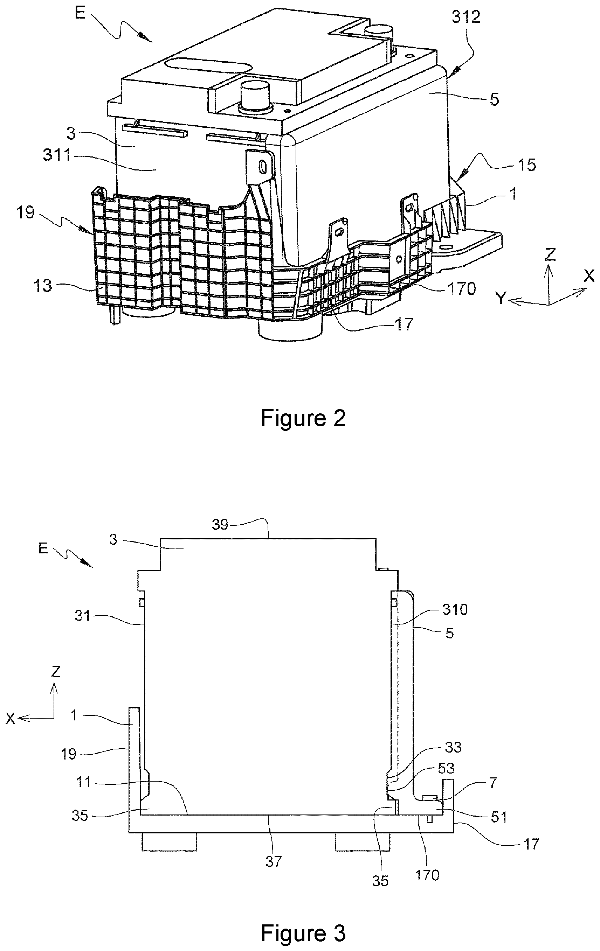

En référence plus particulièrement aux figures 2 et 3, le bac support 1 de batterie comprend un fond 11 horizontal de contour général rectangulaire et depuis lequel s'élèvent quatre parois dont une paroi arrière 13, une paroi avant 15 opposée à la paroi arrière 13, et deux parois latérales dont une paroi de droite 17 et une paroi de gauche 19 opposée à la paroi de droite 17.

Le bac support 1 est rapporté et fixé sur une structure de caisse (non représentée) d'un véhicule grâce à des moyens de fixation tels que des vis agencées dans le fond 11 du bac support 1. La paroi de droite 17 présente un décrochement 170 délimitant un espace permettant l'agencement et la fixation d'une bride de fixation. Le bac support 1 assure des fonctions de de protection et de fixation de la batterie 3.

La batterie 3 est logée dans le bac support 1 dans lequel elle repose en appui sur le fond 11.

De manière connue, la batterie 3 comprend six faces dont quatre faces verticales 31 portant chacune un talon 35 en partie inférieure, une face inférieure horizontale 37 destinée à être en appui sur la face supérieure du fond 11 du bac support 1, et une face supérieure 39 opposée à la face inférieure 37. La batterie 3 est retenue dans le bac support 1 par bridage.

L'ensemble des talons et la partie inférieure du boîtier de la batterie constituent ce que l'on appelle la semelle de la batterie 3 par laquelle elle repose dans le fond 11 du bac de batterie.

Le panneau d'absorption acoustique 5 assure une double fonction d'absorption acoustique et de bridage de la batterie 3.

Le panneau d'absorption acoustique 5 s'étend principalement en regard de l'une des faces verticales 31, dite face équipée 310. La face équipée 310 est ici la face de droite de la batterie 3 agencée à proximité du moteur thermique M.

A titre illustratif, le panneau d'absorption acoustique 5 s'étend en regard d'au moins 75% de la face verticale équipée de la batterie. Une telle aire du panneau d'absorption acoustique 5 permet une réduction du niveau de bruit satisfaisante, par exemple de l'ordre de 0.5 dB.

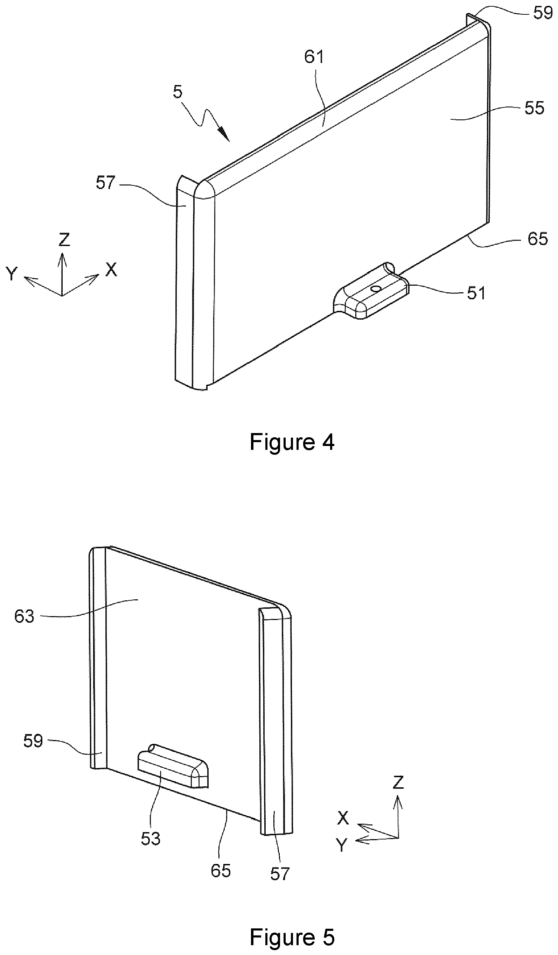

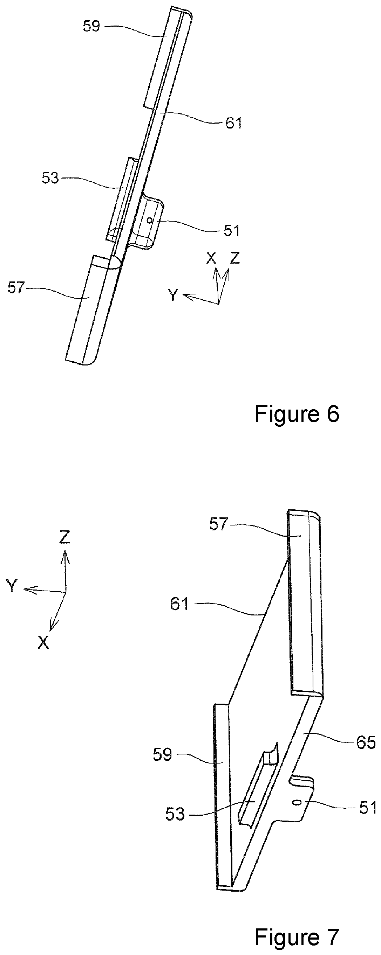

En référence plus particulièrement aux figures 3 à 7, le panneau d'absorption acoustique 5 comporte une armature principale en forme de plaque rectangulaire verticale délimité par une face de droite 55 et une face opposée de gauche 63.

La face de gauche 63 est positionnée en regard de la face verticale équipée 310 de la batterie 3.

La plaque rectangulaire d'armature présente un bord inférieur 65 plan destiné à reposer à plat sur le fond 11 du bac support 1, et un bord supérieur 61, opposé au bord inférieur 65. Dans l'exemple, le bord supérieur 61 est arrondi afin d'être moins coupant, ce qui limite le risque de blessure des opérateurs lors des opérations de montage ou de maintenance.

Le panneau d'absorption acoustique 5 intègre une patte 53, de retenue par bridage de la batterie 3, qui s'étend horizontalement en saillie depuis la face gauche 63 du panneau d'absorption acoustique 5.

La patte de retenue 53, aussi appelée patte de bridage, a sensiblement une forme de plaque rectangulaire, et elle s'étend horizontalement principalement selon la direction X.

La patte de retenue 53 est centrée par rapport au panneau d'absorption acoustique 5 selon la direction X et elle s'étend environ sur un tiers de la longueur du panneau d'absorption acoustique 5.

La patte de retenue 53 comporte une face inférieure horizontale située à une distance du bord inférieur 65 du panneau d'absorption acoustique égale à la hauteur du talon 35 de la batterie 3.

La face inférieure de la patte de retenue 53 est reliée à la face de gauche 63 du panneau d'absorption acoustique 5 par une arête. Les trois autres faces de la patte de retenue 53 en saillie du panneau d'absorption acoustique 5 sont reliées à la face de gauche 63 par des congés.

La patte de retenue 53 fait saillie depuis la face de gauche 63 du panneau d'absorption acoustique 5 selon la direction Y sur une largeur égale à la largeur du talon 35 de la face équipée 310 de la batterie 3.

La largeur de la patte de retenue 53 est comprise entre 3 mm et 20 mm, par exemple égale à 5 mm.

La longueur de la patte de retenue 53 est de préférence supérieure ou égale à 10 mm. La longueur de la patte de retenue 53 est de préférence au maximum sensiblement égale à la longueur du talon 35 de la face équipée 310 de la batterie 3. La longueur de la patte de retenue 53 est par exemple égale à 85 mm.

La face inférieure de la patte de retenue 53 prend appui sur la partie supérieure du talon 35 de la face équipée 310 de la batterie 3. La patte de retenue 53 retient la batterie dans le bac support, notamment selon la direction verticale.

La patte de retenue 53 est reçue en vis-à-vis d'une portion 33 de la batterie. Dans l'exemple représenté, la portion 33 forme un creux dans la face équipée 310 de la batterie, au-dessus du talon 35.

L'ensemble E comporte un dispositif de fixation du panneau d'absorption acoustique 5 sur le bac support 1. Dans l'exemple représenté, le dispositif de fixation comporte une patte de fixation 51 qui s'étend en saillie depuis la face de droite 55 du panneau d'absorption acoustique 5.

La patte de fixation 51 a sensiblement une forme de plaque parallélépipédique, et elle s'étend horizontalement principalement selon la direction X.

La patte de fixation 51 est centrée par rapport au panneau d'absorption acoustique 5 selon la direction X et elle s'étend environ sur un quart de la longueur du panneau d'absorption acoustique 5.

La patte de fixation 51 comporte une face inférieure s'étendant horizontalement dans le prolongement du bord inférieur 65 du panneau d'absorption acoustique 5. La face inférieure de la patte de fixation 51 est destinée à être en vis-à-vis du fond 11 du bac support 1. La face inférieure de la patte de fixation 51 est reliée à la face de gauche 63 du panneau d'absorption acoustique 5 par une arête. Les trois autres faces de la patte de fixation 51 en saillie du panneau d'absorption acoustique 5 sont reliées à la face de droite 55 par des congés.

La patte de fixation 51 fait saillie depuis la face de droite 55 du panneau d'absorption acoustique 5 selon la direction Y sur une largeur égale à la largeur d'un décrochement 170 de la paroi droite 17 du bac support 1.

La largeur de la patte de fixation 51 est comprise entre 5 mm et 40 mm par exemple égale à 12 mm.

La longueur de la patte de fixation 51 est de préférence supérieure ou égale à 5 mm. La longueur de la patte de fixation 51 est de préférence au maximum sensiblement égale à la longueur du talon 35 de la face équipée 310 de la batterie 3. La longueur de la patte de fixation 51 est par exemple égale à 50 mm.

La patte de fixation 51 est vissée sur le fond 11 du bac support 1 selon la direction verticale, ici au moyen d'une vis 7 de fixation, ou en variante au moyen de tout autre élément à tige filetée.

En variante, la patte de fixation 51 est remplacée par un autre dispositif de fixation du panneau d'absorption acoustique 5 sur le bac support 1 tel que par exemple un système par emboîtement.

A titre illustratif et nullement limitatif, le panneau d'absorption acoustique 5 peut comporter une plaque d'armature en acier et une mousse expansée en polyuréthane collée sur la plaque en acier. Dans ce cas, la patte de retenue 53 et la patte de fixation 51 peuvent être réalisés en une seule pièce avec la plaque d'armature en acier.

Le panneau d'absorption acoustique 5 comporte deux bords latéraux verticaux 57 et 59, dont un premier bord latéral 57 arrière recouvrant au moins partiellement une première face 311 verticale à l'arrière de la batterie 3 et adjacente à la face équipée 310 ; et un deuxième bord latéral vertical 59 recouvrant au moins partiellement une deuxième face 312 verticale à l'avant de la batterie 3 adjacente à la face équipée 310 et opposée à la première face 311.

Les bords latéraux verticaux 57 et 59 permettent de positionner le panneau d'absorption acoustique 5 par rapport à la batterie 3 selon la direction longitudinale X.

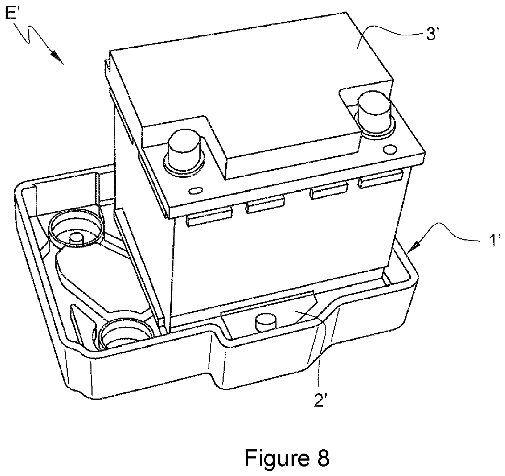

L'invention propose également un procédé d'équipement d'un ensemble avec un panneau d'absorption acoustique 5 tel que décrit précédemment. Un exemple d'ensemble E' à équiper est donné en figure 8. L"ensemble E' comporte :
- un bac support 1' de batterie de véhicule automobile comportant un fond horizontal ;
- une batterie 3' logée dans le bac support 1' dans lequel elle repose verticalement en appui sur le fond ;
- au moins une première patte de retenue 2' de la batterie dans le bac support.

Le panneau d'absorption acoustique 5 comporte, conformément à ce qui précède :
- un dispositif de fixation ; et
- une patte de retenue 53 intégrée au panneau.

Le procédé comporte les étapes suivantes :
- retrait de la première patte de retenue 2' ;
- mise en place du panneau d'absorption acoustique en regard d'une face latérale verticale de la batterie en mettant la patte de retenue 53 intégrée au panneau d'absorption acoustique en lieu et place de la première patte 2' de retenue ;
- fixation du dispositif de fixation du panneau d'absorption acoustique sur le bac support 1'.

Le procédé de l'invention permet de réduire les émissions de bruit d'un véhicule existant et de le conformer à la nouvelle réglementation.

L'invention présente l'avantage de proposer un panneau d'absorption acoustique ayant une double fonction d'absorption acoustique et de bridage et pouvant s'adapter en lieu et place d'un système de bridage actuel.

Les coûts d'implémentation de l'invention dans des véhicules sont limités, tant pour les véhicules existants que pour des véhicules neufs. En effet, pour le montage de véhicules neufs, la chaîne de montage est peu modifiée par rapport à l'existant. Les composants du compartiment moteur et en particulier la batterie et le bac support ne sont pas modifiés par rapport à l'existant. Pour les véhicules existants, le remplacement du système de bridage par le panneau d'absorption acoustique est une opération simple.

Le compartiment moteur n'est pas encombré par le panneau d'absorption acoustique dans la mesure où ce dernier est logé dans le bac support et est plaqué contre une face de la batterie.

Le panneau d'absorption acoustique ne limite pas la ventilation du moteur.

Lors d'une opération de maintenance, le panneau d'absorption acoustique est nécessaire à la fixation de la batterie dans le bac support ce qui limite le risque de ne pas remettre en place le panneau d'absorption acoustique.

Le panneau est robuste ce qui limite les risques d'endommagement du panneau d'absorption acoustique.

## Revendications

1. Ensemble (E) comportant :
- un bac support (1) d'au moins une batterie de véhicule automobile comportant un fond (11) horizontal ;
- une batterie (3) logée dans le bac support (1) dans lequel elle repose verticalement selon une direction verticale (Z) en appui sur le fond (11) ;
- au moins une patte de retenue (53) de la batterie (3) dans le bac support (1) ;
**caractérisé en ce que** l'ensemble (E) comporte :
- un panneau d'absorption acoustique (5) qui s'étend au moins en regard d'une face latérale verticale, dite équipée (310), de la batterie (3) ;
- un dispositif de fixation du panneau d'absorption acoustique (5) sur le bac support (1),
**et en ce que** la au moins une patte de retenue (53) de la batterie dans le bac support (1) est intégrée au panneau d'absorption acoustique (5).

2. Ensemble (E) selon la revendication 1, **caractérisé en ce que** la patte de retenue (53) s'étend horizontalement et est reçue en vis-à-vis d'une portion (33) de la batterie (3) pour retenir la batterie (3) dans le bac support (1) selon la direction verticale (Z).

3. Ensemble (E) selon l'une des revendications 1 ou 2, **caractérisé en ce que** le dispositif de fixation du panneau d'absorption acoustique (5) comporte au moins une tige filetée (7) de fixation selon la direction verticale (Z).

4. Ensemble (E) selon la revendication 3, **caractérisé en ce que** le dispositif de fixation comporte une patte de fixation (51) s'étendant horizontalement en vis-à-vis du fond du bac support (1), et **en ce que** la patte de fixation (51) est fixée au fond du bac support (1) au moyen de ladite tige filetée (7).

5. Ensemble (E) selon l'une quelconque des revendications précédentes, **caractérisé en ce que** le panneau d'absorption acoustique (5) comporte une plaque de préférence en acier, et une mousse expansée en polyuréthane collée sur ladite plaque.

6. Ensemble (E) selon la revendication 5, **caractérisé en ce que** la patte de retenue (53) est réalisée en une seule pièce avec la plaque du panneau d'absorption acoustique (5).

7. Ensemble (E) selon l'une des revendications 5 ou 6 prise en combinaison avec la revendication 4, **caractérisé en ce que** la patte de fixation (51) est réalisée en une seule pièce avec la plaque du panneau d'absorption acoustique (5).

8. Ensemble (E) selon l'une quelconque des revendications précédentes, **caractérisé en ce que** le panneau d'absorption acoustique (5) s'étend en regard d'au moins 75% de l'aire de ladite face équipée (310) de la batterie (3).

9. Ensemble (E) selon l'une quelconque des revendications précédentes, **caractérisé en ce que** le panneau d'absorption acoustique (5) comporte un premier bord latéral (57) recouvrant au moins partiellement une première autre face (311) verticale de la batterie (3) adjacente à la face latérale équipée (310), et un deuxième bord latéral (59) recouvrant au moins partiellement une deuxième autre face (312) verticale de la batterie (3) qui est adjacente à la face latérale équipée (310) et qui est opposée à ladite première autre face verticale (311).

10. Procédé d'équipement d'un ensemble (E') avec un panneau d'absorption acoustique (5), l'ensemble comportant :
- un bac support (1') de batterie de véhicule automobile comportant un fond horizontal ;
- une batterie (3') logée dans le bac support (1') dans lequel elle repose verticalement en appui sur le fond ;
- au moins une première patte de retenue (2') de la batterie dans le bac support (1') ;
le panneau d'absorption acoustique (5) comportant :
- un dispositif de fixation ; et
- une patte de retenue (53) intégrée au panneau ;
le procédé étant **caractérisé en ce qu'**il comporte les étapes suivantes :
- retrait de la première patte de retenue (2') ;
- mise en place du panneau d'absorption acoustique (5) en regard d'une face latérale verticale de la batterie en mettant la patte de retenue (53) intégrée au panneau d'absorption acoustique (5) en lieu et place de la première patte de retenue (2') ;
- fixation du dispositif de fixation du panneau d'absorption acoustique sur le bac support (1').

## Patentansprüche

1. Anordnung (E), welche aufweist:
- einen Tragbehälter (1) wenigstens einer Kraftfahrzeugbatterie, der einen horizontalen Boden (11) aufweist;
- eine Batterie (3), die in dem Tragbehälter (1) aufgenommen ist, in welchem sie vertikal in einer vertikalen Richtung (Z) am Boden (11) anliegend ruht;
- wenigstens eine Lasche zum Halten (53) der Batterie (3) im Tragbehälter (1),
**dadurch gekennzeichnet, dass** die Anordnung (E) aufweist:
- eine schallabsorbierende Platte (5), welche sich wenigstens gegenüber einer vertikalen, sogenannten ausgerüsteten lateralen Seite (310) der Batterie (3) erstreckt;
- eine Vorrichtung zur Befestigung der schallabsorbierenden Platte (5) auf dem Tragbehälter (1),
und dadurch, dass die wenigstens eine Lasche zum Halten (53) der Batterie im Tragbehälter (1) in die schallabsorbierende Platte (5) integriert ist.

2. Anordnung (E) nach Anspruch 1, **dadurch gekennzeichnet, dass** sich die Haltelasche horizontal erstreckt und gegenüber einem Abschnitt (33) der Batterie (3) aufgenommen wird, um die Batterie (3) in der vertikalen Richtung (Z) im Tragbehälter (1) zu halten (53).

3. Anordnung (E) nach einem der Ansprüche 1 oder 2, **dadurch gekennzeichnet, dass** die Vorrichtung zur Befestigung der schallabsorbierenden Platte (5) wenigstens einen Gewindebolzen (7) zur Befestigung in der vertikalen Richtung (Z) aufweist.

4. Anordnung (E) nach Anspruch 3, **dadurch gekennzeichnet, dass** die Vorrichtung zur Befestigung eine Befestigungslasche (51) aufweist, die sich horizontal gegenüber dem Boden des Tragbehälters (1) erstreckt, und dadurch, dass die Befestigungslasche (51) mittels des Gewindebolzens (7) am Boden des Tragbehälters (1) befestigt ist.

5. Anordnung (E) nach einem der vorhergehenden Ansprüche, **dadurch gekennzeichnet, dass** die schallabsorbierende Platte (5) eine Scheibe, vorzugsweise aus Stahl, und einen auf die Scheibe geklebten geschlossenzelligen Polyurethanschaum aufweist.

6. Anordnung (E) nach Anspruch 5, **dadurch gekennzeichnet, dass** die Haltelasche (53) mit der schallabsorbierenden Platte (5) aus einem Stück hergestellt ist.

7. Anordnung (E) nach einem der Ansprüche 5 oder 6 in Kombination mit Anspruch 4, **dadurch gekennzeichnet, dass** die Befestigungslasche (51) mit der Scheibe der schallabsorbierenden Platte (5) aus einem Stück hergestellt ist.

8. Anordnung (E) nach einem der vorhergehenden Ansprüche, **dadurch gekennzeichnet, dass** sich die schallabsorbierende Platte (5) gegenüber von wenigstens 75 % der Fläche der ausgerüsteten Seite (310) der Batterie (3) erstreckt.

9. Anordnung (E) nach einem der vorhergehenden Ansprüche, **dadurch gekennzeichnet, dass** die schallabsorbierende Platte (5) einen ersten seitlichen Rand (57) aufweist, der eine erste weitere vertikale Seite (311) der Batterie (3), die der ausgerüsteten lateralen Seite (310) benachbart ist, wenigstens teilweise bedeckt, und einen zweiten seitlichen Rand (59), der eine zweite weitere vertikale Seite (312) der Batterie (3), die der ausgerüsteten lateralen Seite (310) benachbart ist und die der ersten weiteren vertikalen Seite (311) gegenüberliegt, wenigstens teilweise bedeckt.

10. Verfahren zur Ausrüstung einer Anordnung (E') mit einer schallabsorbierenden Platte (5), wobei die Anordnung aufweist:
- einen Tragbehälter (1') einer Kraftfahrzeugbatterie, der einen horizontalen Boden aufweist;
- eine Batterie (3'), die in dem Tragbehälter (1') aufgenommen ist, in welchem sie vertikal am Boden anliegend ruht;
- wenigstens eine erste Lasche zum Halten (2') der Batterie im Tragbehälter (1');
wobei die schallabsorbierende Platte (5) aufweist:
- eine Vorrichtung zur Befestigung; und
- eine Haltelasche (53), die in die Platte integriert ist;
wobei das Verfahren **dadurch gekennzeichnet ist, dass** es die folgenden Schritte umfasst:
- Entfernen der ersten Haltelasche (2');
- Anordnen der schallabsorbierenden Platte (5) gegenüber einer vertikalen lateralen Seite der Batterie, wobei die in die schallabsorbierende Platte (5) integrierte Haltelasche (53) anstelle der ersten Haltelasche (2') angebracht wird;
- Befestigen der Vorrichtung zur Befestigung der schallabsorbierenden Platte auf dem Tragbehälter (1').

## Claims

1. Assembly (E) comprising:
- a support tray (1) for at least one motor vehicle battery, comprising a horizontal base (11);
- a battery (3) accommodated in the support tray (1) in which it rests vertically against the base (11) in a vertical direction (Z);
- at least one retaining tab (53) for retaining the battery (3) in the support tray (1);
**characterized in that** the assembly (E) comprises:
- an acoustic absorption panel (5) which extends at least facing a vertical lateral face, referred to as equipped face (310), of the battery (3);
- a fixing device for fixing the acoustic absorption panel (5) to the support tray (1),
**and in that** the at least one retaining tab (53) for retaining the battery in the support tray (1) is integrated into the acoustic absorption panel (5).

2. Assembly (E) according to Claim 1, **characterized in that** the retaining tab (53) extends horizontally and is received facing a portion (33) of the battery (3) in order to retain the battery (3) in the support tray (1) in the vertical direction (Z).

3. Assembly (E) according to either one of Claims 1 and 2, **characterized in that** the fixing device of the acoustic absorption panel (5) comprises at least one threaded rod (7) for fixing in the vertical direction (Z).

4. Assembly (E) according to Claim 3, **characterized in that** the fixing device comprises a fixing tab (51) extending horizontally facing the base of the support tray (1), and **in that** the fixing tab (51) is fixed to the base of the support tray (1) by means of said threaded rod (7).

5. Assembly (E) according to any one of the preceding claims, **characterized in that** the acoustic absorption panel (5) comprises a plate preferably made of steel, and an expanded foam made of polyurethane adhesively bonded to said plate.

6. Assembly (E) according to Claim 5, **characterized in that** the retaining tab (53) is produced as a single part with the plate of the acoustic absorption panel (5) .

7. Assembly (E) according to either one of Claims 5 and 6 taken in combination with Claim 4, **characterized in that** the fixing tab (51) is produced as a single part with the plate of the acoustic absorption panel (5) .

8. Assembly (E) according to any one of the preceding claims, **characterized in that** the acoustic absorption panel (5) extends facing at least 75% of the area of said equipped face (310) of the battery (3) .

9. Assembly (E) according to any one of the preceding claims, **characterized in that** the acoustic absorption panel (5) comprises a first lateral edge (57) at least partially covering a first other vertical face (311) of the battery (3) adjacent to the equipped lateral face (310), and a second lateral edge (59) at least partially covering a second other vertical face (312) of the battery (3) that is adjacent to the equipped lateral face (310) and that is opposite to said first other vertical face (311).

10. Method for equipping an assembly (E') with an acoustic absorption panel (5), the assembly comprising:
- a support tray (1') for motor vehicle batteries, comprising a horizontal base;
- a battery (3') accommodated in the support tray (1') in which it rests vertically against the base;
- at least one first retaining tab (2') for retaining the battery in the support tray (1'); the acoustic absorption panel (5) comprising:
- a fixing device; and
- a retaining tab (53) integrated into the panel; the method being **characterized in that** it comprises the following steps:
- removing the first retaining tab (2');
- installing the acoustic absorption panel (5) facing a vertical lateral face of the battery by putting the retaining tab (53) integrated into the acoustic absorption panel (5) in place of the first retaining tab (2');
- fixing the fixing device of the acoustic absorption panel to the support tray (1').
